(19) Europäisches Patentamt
European Patent Office
Office européen des brevets

(11) **EP 2 045 624 A1**

(12) **EUROPEAN PATENT APPLICATION**

(43) Date of publication:
**08.04.2009 Bulletin 2009/15**

(51) Int Cl.:
**G01S 15/00** (2006.01)

(21) Application number: **08159916.9**

(22) Date of filing: **08.07.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **01.10.2007 KR 20070098616**
**10.03.2008 KR 20080021870**

(71) Applicant: **Samsung Electronics Co., Ltd.**
**Suwon-si, Gyeonggi-do 442-743 (KR)**

(72) Inventors:
• **Kim, Dong Won**
**Gyeonggi-do (KR)**

• **Yoo, Kyung Hwan**
**Gyeonggi-do (KR)**
• **Hong, Jun Pyo**
**Gyeonggi-do (KR)**
• **Joo, Jae Man**
**Gyeonggi-do (KR)**
• **Chung, Woo Ram**
**Gyeonggi-do (KR)**

(74) Representative: **Grünecker, Kinkeldey,**
**Stockmair & Schwanhäusser**
**Anwaltssozietät**
**Leopoldstrasse 4**
**80802 München (DE)**

(54) **Ultrasonic distance sensor and robot cleaner using the same**

(57) Disclosed herein are an ultrasonic distance sensor that is capable of extending an ultrasonic wave transmitted from a wave transmitter to sense the distance between an object located in a wide region and an installation body having the sensor installed therein and a robot cleaner using the same. The ultrasonic distance sensor includes a wave transmitter to transmit an ultrasonic wave, an ultrasonic wave extender to extend the ultrasonic wave, and a wave receiver to receive the ultrasonic wave reflected from an object.

Fig. 3

EP 2 045 624 A1

**Description**

BACKGROUND

1. Field

The present invention relates to an ultrasonic distance sensor and a robot cleaner using the same, and, more particularly, to an ultrasonic distance sensor that is capable of extending an ultrasonic wave transmitted from a wave transmitter to sense the distance between an object located in a wide region and an installation body having the sensor installed therein and a robot cleaner using the same.

2. Description of the Related Art

Generally, an ultrasonic distance sensor, including a wave transmitter to transmit an ultrasonic wave and a wave receiver to receive the transmitted ultrasonic wave, senses the distance between an installation body having the sensor installed therein and an object using time taken until the ultrasonic wave, transmitted from the waver transmitter, is reflected from the object and then received by the wave receiver.

The ultrasonic distance sensor is installed at the top of a liquid storage tank to sense the level of liquid stored in the liquid storage tank to measure the flow rate of the liquid. Also, the ultrasonic distance sensor is installed at the rear of a vehicle, which a driver cannot observe with the naked eye, to sense an obstacle located behind the vehicle.

A conventional ultrasonic distance sensor, disclosed in Korean Patent Publication No. 2006-0047030, is installed at a robot cleaner that automatically moves to clean a region to be cleaned to serve as an obstacle distance sensor of the robot cleaner to sense the distance between the robot cleaner and an obstacle.

The conventional ultrasonic distance sensor, including a wave transmitter having a hom to allow an ultrasonic wave to advance in one direction and a wave receiver installed adjacent to the wave transmitter, multiplies time taken until the ultrasonic wave, transmitted from the waver transmitter, is reflected from an object and then received by the wave receiver by ultrasonic speed and divides the product by two to sense the distance between the object and an installation body having the sensor installed therein.

In the conventional ultrasonic distance sensor, however, the ultrasonic wave, transmitted from the wave transmitter, advances only in one direction. As a result, it is not possible to sense the distance between the installation body and an object located in a region to which the ultrasonic wave is not transmitted.

Furthermore, the robot cleaner using the conventional ultrasonic distance sensor requires a large number of ultrasonic distance sensors to sense the distances between the robot cleaner and obstacles located on paths along which the robot cleaner moves or above the robot cleaner. As a result, the manufacturing costs of the robot cleaner increase.

SUMMARY

In an aspect of the present invention, there is provided an ultrasonic distance sensor that is capable of extending an ultrasonic wave transmitted from a wave transmitter to sense the distance between an object located in a wide region and an installation body having the sensor installed therein.

In another aspect of the present invention, there is provided a robot cleaner that is capable of sensing distances to obstacles (objects) located on paths along which the robot cleaner moves or above the robot cleaner through the use of a reduced number of ultrasonic distance sensors, thereby reducing the manufacturing costs of the robot cleaner using the ultrasonic distance sensor.

In accordance with one aspect of the present invention, there is provided an ultrasonic distance sensor including a wave transmitter to transmit an ultrasonic wave, an ultrasonic wave extender to extend the ultrasonic wave, and a wave receiver to receive the ultrasonic wave reflected from an object.

The ultrasonic distance sensor may further include an ultrasonic sensor controller to calculate a wave receiving distance (L1) by using time taken until the ultrasonic wave, transmitted from the waver transmitter, is received by the wave receiver and substituting an installation position of the wave transmitter, an installation position of the wave receiver, and the wave receiving distance (L1) into [Mathematical equation 1] to calculate a distance to the object.

[Mathematical equation 1]

$$\sqrt{(Dx-a)^2 + b^2 + (h-c)^2} + \sqrt{(Dx-a1)^2 + b1^2 + (h-c1)^2} = L1$$

In [Mathematical equation 1], (a, b, c) are an installation position of the wave transmitter on XYZ spatial coordinates with the center of the installation body as the origin, (a1, b1, c1) are an installation position of the wave receiver on XYZ spatial coordinates with the center of the installation body as the origin, h is an object sensing height on an object sensing plane (X,Y,Z=h) of the installation body, and Dx is the distance between the center of the installation body and the object at an ultrasonic sensing zone (X,Y=0,Z=h) on the object sensing plane (X,Y,Z=h).

The ultrasonic wave extender may include an obstacle disposed in front of the wave transmitter to obstruct the advance of the ultrasonic wave.

The ultrasonic wave extender may include opposite sidewalls formed along opposite sides of the wave transmitter in front of the wave transmitter such that each sidewall has a predetermined length and corners formed at ends of the opposite sidewalls.

In accordance with another aspect of the present invention, there is provided an ultrasonic distance sensor including a wave transmitter to transmit an ultrasonic wave, an ultrasonic wave extender to extend the ultrasonic wave, first and second wave receivers to receive the ultrasonic wave reflected from an object, and an ultrasonic sensor controller to calculate first and second wave receiving distances (L1, L2) by using time taken until the ultrasonic wave, transmitted from the waver transmitter, is received by the first and second wave receivers, substituting the first and second wave receiving distances (L1, L2) into [Mathematical equation 3] and [Mathematical equation 4], associating [Mathematical equation 3] and [Mathematical equation 4] with each other to acquire object projective coordinates, and sensing an object distance, which is an x-axis coordinate of the object projective coordinates.

[Mathematical equation 3]

$$\sqrt{(Px-a)^2 + (Py-b)^2 + (h-c)^2} + \sqrt{(Px-a1)^2 + (Py-b1)^2 + (h-c1)^2} = L1$$

[Mathematical equation 4]

$$\sqrt{(Px-a)^2 + (Py-b)^2 + (h-c)^2} + \sqrt{(Px-a2)^2 + (Py-b2)^2 + (h-c2)^2} = L2$$

In [Mathematical equation 3] and [Mathematical equation 4], (a, b, c) are an installation position of the wave transmitter on XYZ spatial coordinates with the center of an installation body having the sensor installed therein as the origin, (a1, b1, c1) are an installation position of the first wave receiver on XYZ spatial coordinates with the center of the installation body as the origin, (a2, b2, c2) are an installation position of the second wave receiver on XYZ spatial coordinates with the center of the installation body as the origin, h is an object sensing height on an object sensing plane (X,Y,Z=h) of the installation body, and (Px, Py) are object projective coordinates at which intersection points between an elliptical sphere equation defined by L1, the installation position (a, b, c) of the wave transmitter, and the installation position (a1, b1, c1) of the first wave receiver and an elliptical sphere equation defined by L2, the installation position (a, b, c) of the wave transmitter, and the installation position (a2, b2, c2) of the second wave receiver are projected on the object sensing plane (X,Y,Z=h) of the installation body.

The ultrasonic wave extender may include an obstacle disposed in front of the wave transmitter to obstruct the advance of the ultrasonic wave.

The ultrasonic wave extender may include opposite sidewalls formed along opposite sides of the wave transmitter in front of the wave transmitter such that each sidewall has a predetermined length and corners formed at ends of the opposite sidewalls.

In accordance with another aspect of the present invention, there is provided a robot cleaner using an ultrasonic distance sensor, the ultrasonic distance sensor including a wave transmitter to transmit an ultrasonic wave, an ultrasonic wave extender to extend the ultrasonic wave, and a wave receiver to receive the ultrasonic wave reflected from an object.

The ultrasonic distance sensor may further include an ultrasonic sensor controller to calculate a wave receiving distance (L1) by using time taken until the ultrasonic wave, transmitted from the waver transmitter, is received by the wave receiver and substituting an installation position of the wave transmitter, an installation position of the wave receiver, and the wave receiving distance into [Mathematical equation 1] to calculate an object distance.

[Mathematical equation 1]

$$\sqrt{(Dx-a)^2 + b^2 + (h-c)^2} + \sqrt{(Dx-a1)^2 + b1^2 + (h-c1)^2} = L1$$

In [Mathematical equation 1], (a, b, c) are an installation position of the wave transmitter on XYZ spatial coordinates with the center of the robot cleaner as the origin, (a1, b1, c1) are an installation position of the wave receiver on XYZ spatial coordinates with the center of the robot cleaner as the origin, h is an object sensing height on an object sensing plane (X,Y,Z=h) of the robot cleaner, and Dx is the distance between the center of the robot cleaner and the object at an ultrasonic sensing zone (X,Y=0,Z=h) on the object sensing plane (X,Y,Z=h).

The ultrasonic wave extender may include an obstacle disposed in front of the wave transmitter to obstruct the advance of the ultrasonic wave.

The ultrasonic wave extender may include opposite sidewalls formed along opposite sides of the wave transmitter in front of the wave transmitter such that each sidewall has a predetermined length and corners formed at ends of the opposite sidewalls.

In accordance with a further aspect of the present invention, there is provided a robot cleaner using an ultrasonic distance sensor, the ultrasonic distance sensor including a wave transmitter installed at the top of a cleaner body to transmit an ultrasonic wave, an ultrasonic wave extender to extend the ultrasonic wave, and first and second wave receivers installed at the circumference of the cleaner body to receive the ultrasonic wave reflected from an object.

The ultrasonic distance sensor may further include an ultrasonic sensor controller to calculate first and second wave receiving distances (L1, L2) by using time taken until the ultrasonic wave, transmitted from the waver transmitter, is received by the first and second wave receivers, substituting the first and second wave receiving distances into [Mathematical equation 3] and [Mathematical equation 4], associating [Mathematical equation 3] and [Mathematical equation 4] with each other to acquire object projective coordinates, and sensing an object distance, which is an x-axis coordinate of the object projective coordinates.

[Mathematical equation 3]

$$\sqrt{(Px-a)^2 + (Py-b)^2 + (h-c)^2} + \sqrt{(Px-a1)^2 + (Py-b1)^2 + (h-c1)^2} = L1$$

$$\sqrt{(Px-a)^2 + (Py-b)^2 + (h-c)^2} + \sqrt{(Px-a2)^2 + (Py-b2)^2 + (h-c2)^2} = L2$$

In [Mathematical equation 3] and [Mathematical equation 4], (a, b, c) are an installation position of the wave transmitter on XYZ spatial coordinates with the center of the robot cleaner as the origin, (a1, b1, c1) are an installation position of the first wave receiver on XYZ spatial coordinates with the center of the robot cleaner as the origin, (a2, b2, c2) are an installation position of the second wave receiver on XYZ spatial coordinates with the center of the robot cleaner as the origin, h is an object sensing height on an object sensing plane (X,Y,Z=h) of the robot cleaner, and (Px, Py) are object projective coordinates at which intersection points between an elliptical sphere equation defined by L1, the installation position of the wave transmitter, and the installation position of the first wave receiver and an elliptical sphere equation defined by L2, the installation position of the wave transmitter, and the installation position of the second wave receiver are projected on the object sensing plane (X,Y,Z=h) of the robot cleaner.

The ultrasonic wave extender may include an obstacle disposed in front of the wave transmitter to obstruct the advance of the ultrasonic wave.

The ultrasonic wave extender may include opposite sidewalls formed along opposite sides of the wave transmitter in front of the wave transmitter such that each sidewall has a predetermined length and corners formed at ends of the opposite sidewalls.

Additional aspects and/or advantages of the invention will be set forth in part in the description which follows and, in part, will be obvious from the description, or may be learned by practice of the invention.

BRIEF DESCRIPTION OF THE DRAWINGS

These and/or other aspects, features, and advantages of the invention will become apparent and more readily appreciated from the following description of exemplary embodiments, taken in conjunction with the accompanying drawings, of which:

FIG. 1 is a perspective view illustrating a robot cleaner using an ultrasonic distance sensor according to an exemplary embodiment of the present invention;

FIG. 2 is a sectional view taken along line I-I' of FIG. 1;

FIG. 3 is a view illustrating the operation of an ultrasonic wave extension unit according to an exemplary embodiment of the present invention;

FIG. 4 is a block diagram illustrating a control system of a robot cleaner using an ultrasonic distance sensor according to an exemplary embodiment of the present invention; and

FIGS. 5 to 7 are views illustrating an obstacle (object) distance sensing method of an ultrasonic distance sensor according to an exemplary embodiment of the present invention.

DETAILED DESCRIPTION OF EMBODIMENTS

Reference will now be made in detail to exemplary embodiment of the present invention, examples of which are illustrated in the accompanying drawings, wherein like reference numerals refer to like elements throughout. Exemplary embodiments are described below to explain the present invention by referring to the figures.

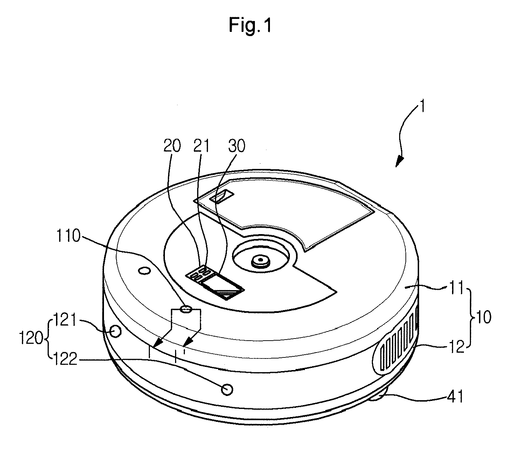

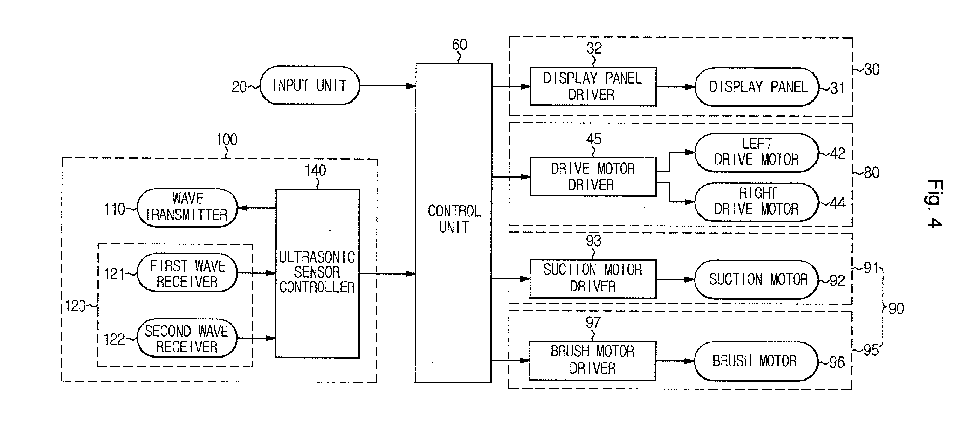

Referring to FIGS. 1 to 4, a robot cleaner 1 using an ultrasonic distance sensor according to an exemplary embodiment of the present invention (hereinafter, simply referred to as a 'robot cleaner') includes a cleaner body 10 having a battery installed therein, the cleaner body 10 including an upper body 11 and a lower body 12, a drive unit 80 including a left drive wheel 41 and a right drive wheel (not shown) partially exposed downward from opposite sides of the lower body 12, a display unit 30 to display the operation state of the robot cleaner 1, a cleaning unit 90, including an agitator 95 and a suction part 91, to clean a path along which the robot cleaner 1 moves, a control unit 60 to control the overall operation of the robot cleaner 1, an input unit 20 to allow a user to input a manipulation command to the control unit 60, and an ultrasonic distance sensor 100 installed at the cleaner body 10 to sense the distance between an obstacle O around the robot cleaner 1 and the robot cleaner 1, i.e., an obstacle distance.

The input unit 20 includes a plurality of buttons 21 partially exposed upward from the top of the upper body 11. The input unit 20 provides a manipulation command corresponding to any one of the buttons 21 pushed by the user to the control unit 60.

The display unit 30 includes a display panel 31 visibly installed at the top of the upper body 11 and a display panel driver 32 to drive the display panel 31. Under the control of the control unit 60, the display panel driver 32 drives the display panel 31 to display the operation state and the setting state of the robot cleaner 1.

The drive unit 80 includes a left drive wheel 41 and a right drive wheel rotatably installed in the lower body 12 such that the left drive wheel 41 and the right drive wheel are partially exposed downward from opposite sides of the lower body 12, left and right drive motors 42 and 44 to rotate the left drive wheel 41 and the right drive wheel, respectively, and a drive motor driver 45 to drive the left and right drive motors 42 and 44. Under the control of the control unit 60, the drive motor driver 45 controls the left and right drive motors 42 and 44 to rotate in their own rotation directions and at their own rotation speeds such that the robot cleaner 1 turns left or right and moves forward or backward while turning left or right.

The cleaning unit 90 further includes an agitator 95 to scatter dust on the floor, a suction part 91 to suction the dust scattered by the agitator 95, and a dust collector (not shown) to collect dust suctioned by the suction part 91.

The agitator 95 includes a brush (not shown) partially exposed from an opening (not shown) formed at the bottom of the lower body 12 in a rectangular shape, a brush motor 96 to rotate the brush, and a brush motor driver 97 to drive the brush motor 96. When the brush motor 96 is rotated under the control of the control unit 60, the brush scatters dust sticking to a surface to be cleaned, such as a carpet.

The suction part 91 includes a suction pump (not shown), a suction motor 92 to rotate the suction pump, and a suction motor driver 93 to drive the suction motor 92. When the suction motor 92 is rotated under the control of the control unit 60, the suction pump suctions and discharges air, including the dust scattered by the agitator 95, to the dust collector.

The dust collector includes a dust bag (not shown) to filter the dust. The dust collector filters the dust off the air discharged from the suction part 91. The filtered air is exhausted out of the cleaner body 10.

The ultrasonic distance sensor 100 includes a wave transmitter 110 installed at the top of the cleaner body 10, an ultrasonic wave extender 130 formed in front of the wave transmitter 110, first and second wave receivers 121 and 122 installed at the circumference of the cleaner body 10 to receive an ultrasonic wave reflected from an obstacle O, and an ultrasonic sensor controller 140 to calculate first and second wave receiving distances L1 and L2 using time taken until an ultrasonic wave, transmitted from the waver transmitter 110, is received by the first and second wave receivers 121 and 122, sense the distance between the center C of the robot cleaner 1 and the obstacle O, i.e., an obstacle distance Dx, on an obstacle sensing plane using the first and second wave receiving distances L1 and L2, the installation positions of the wave transmitter 110 and the first and second wave receivers 121 and 122, and [Mathematical equation 1] to [Mathematical equation 4] defined by an elliptical sphere equation, and transmit the sensed obstacle distance Dx to the control unit 60.

The ultrasonic wave extender 130 includes opposite sidewalls 131 formed along opposite sides of the wave transmitter 110 in front of the wave transmitter 110 such that each sidewall 131 has a predetermined length d1 and corners 132 formed at ends of the opposite sidewalls 131 to serve as obstacles to obstruct the advance of an ultrasonic waver transmitted from the wave transmitter 110. In other words, a depression 133 of the predetermined depth d1 is formed in the cleaner body 10 from the outer surface of the cleaner body 10, with the result that the opposite sidewalls 131 are defined at opposite sides of the depression 133. The wave transmitter 110 is installed at the bottom of the depression 133.

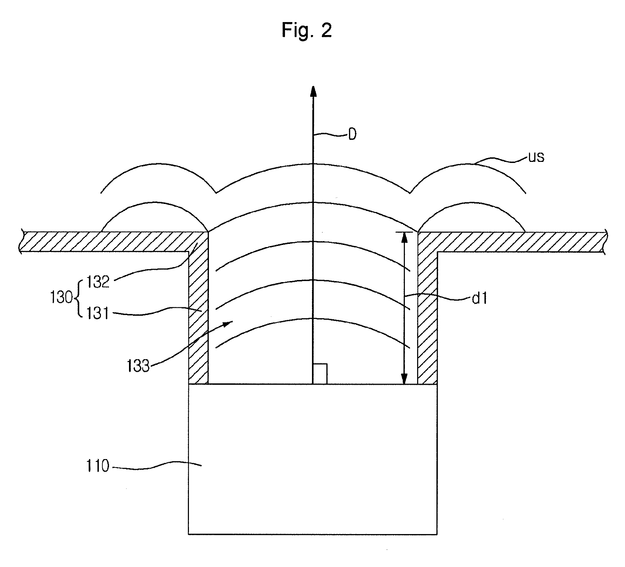

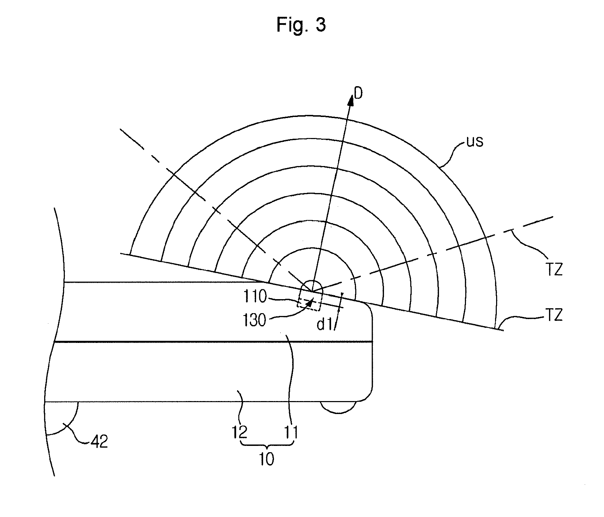

As shown in FIG. 2 and FIG. 3, the ultrasonic wave extender 130 extends the ultrasonic wave, transmitted from the wave transmitter 110, to a transmission zone TZ according Huygens' Principle. That is, the ultrasonic wave, transmitted from the wave transmitter 110, is diffracted and extended at the corners 132.

The depth d1 of the depression 133 or the length of the opposite sidewalls 131 may be adjusted to control the transmission zone TZ. In other words, as shown in FIG. 3, the longer the depth d1 of the depression 133 or the length of the opposite sidewalls 131 is, the narrower the width of the transmission zone TZ is. The shorter the depth d1 of the depression 133 or the length of the opposite sidewalls 131 is, the wider the width of the transmission zone TZ is.

The first and second wave receivers 121 and 122, constituting a wave receiver 120, are formed at the circumference of the cleaner body such that the first and second wave receivers 121 and 122 are symmetrical to each other about the wave transmitter 110.

The waver transmitter 110 is provided at the output side of the ultrasonic sensor controller 140, and the first and second wave receivers 121 and 122, which receive the ultrasonic wave transmitted from the wave transmitter 100 and reflected from the obstacle O, are provided at the input side of the ultrasonic sensor controller 140. The ultrasonic sensor controller 140 is communicatively connected to the control unit 60 of the robot cleaner 1.

The ultrasonic sensor controller 140 senses the distance between the center C of the robot cleaner 1 and the obstacle O, i.e., the obstacle distance Dx, on the obstacle sensing plane using the first and second wave receiving distances L1 and L2, the installation positions of the wave transmitter 110 and the first and second wave receivers 121 and 122, and [Mathematical equation 1] to [Mathematical equation 4] defined by the elliptical sphere equation.

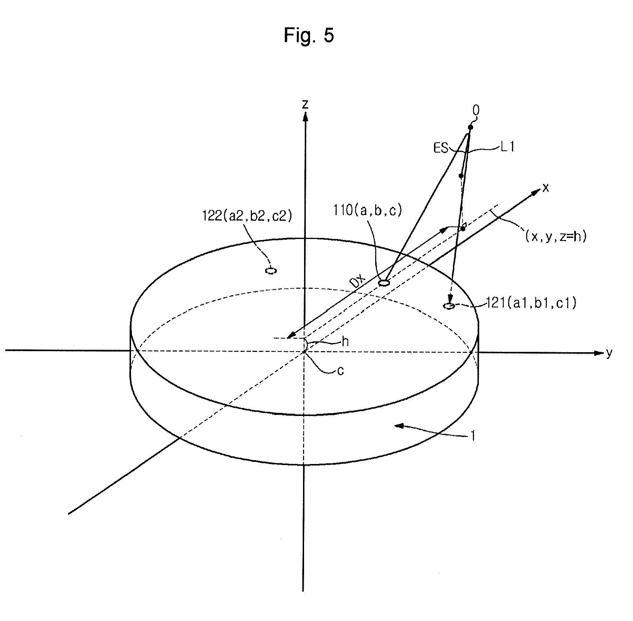

In other words, when an ultrasonic wave, transmitted from the wave transmitter 110, is received by only the first wave receiver 121, as shown in FIG. 5, the ultrasonic sensor controller 140 multiplies time taken until the ultrasonic wave, transmitted from the waver transmitter 110, is received by the first wave receiver 121 by ultrasonic speed to calculate a first wave receiving distance L1, substitutes the first wave receiving distance L1 into the following [Mathematical equation 1] defined by the elliptical sphere equation, and arranges [Mathematical equation 1] to calculate the obstacle distance Dx. The calculated obstacle distance Dx is transmitted to the control unit 60.

[Mathematical equation 1]

$$\sqrt{(Dx-a)^2 + b^2 + (h-c)^2} + \sqrt{(Dx-a1)^2 + b1^2 + (h-c1)^2} = L1$$

In [Mathematical equation 1], (a, b, c) are the installation position of the wave transmitter 110 on XYZ spatial coordinates with the center C of the robot cleaner 1 as the origin, (a1, b1, c1) are the installation position of the first wave receiver 121 on XYZ spatial coordinates with the center C of the robot cleaner 1 as the origin, h is the obstacle sensing height on the obstacle sensing plane (X,Y,Z=h) of the robot cleaner 1, and Dx is the distance between the center C of the robot cleaner 1 and the obstacle O at the ultrasonic sensing zone (X,Y=0,Z=h) on the obstacle sensing plane (X,Y,Z=h).

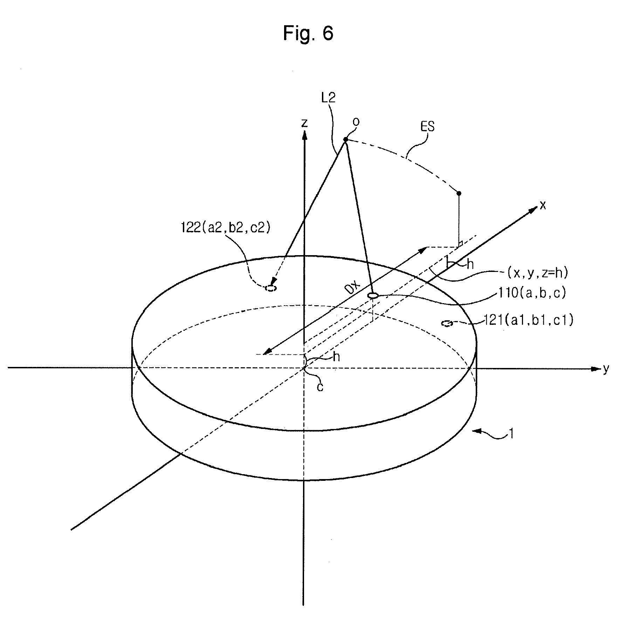

On the other hand, when an ultrasonic wave, transmitted from the wave transmitter 110, is received by only the second wave receiver 122, as shown in FIG. 6, the ultrasonic sensor controller 140 multiplies time taken until the ultrasonic wave, transmitted from the waver transmitter 110, is received by the second wave receiver 122 by ultrasonic speed to calculate a second wave receiving distance L2, substitutes the second wave receiving distance L2 into the following [Mathematical equation 2] defined by the elliptical sphere equation, and arranges [Mathematical equation 2] to calculate the obstacle distance Dx. The calculated obstacle distance Dx is transmitted to the control unit 60.

[Mathematical equation 2]

$$\sqrt{(Dx-a)^2 + b^2 + (h-c)^2} + \sqrt{(Dx-a2)^2 + b2^2 + (h-c2)^2} = L2$$

In [Mathematical equation 2], (a, b, c) are the installation position of the wave transmitter 110 on XYZ spatial coordinates with the center C of the robot cleaner 1 as the origin, (a2, b2, c2) are the installation position of the second wave receiver 122 on XYZ spatial coordinates with the center C of the robot cleaner 1 as the origin, h is the obstacle sensing height on the obstacle sensing plane (X,Y,Z=h) of the robot cleaner 1, and Dx is the distance between the center C of the robot cleaner 1 and the obstacle O at the ultrasonic sensing zone (X,Y=0,Z=h) on the obstacle sensing plane (X,Y,Z=h).

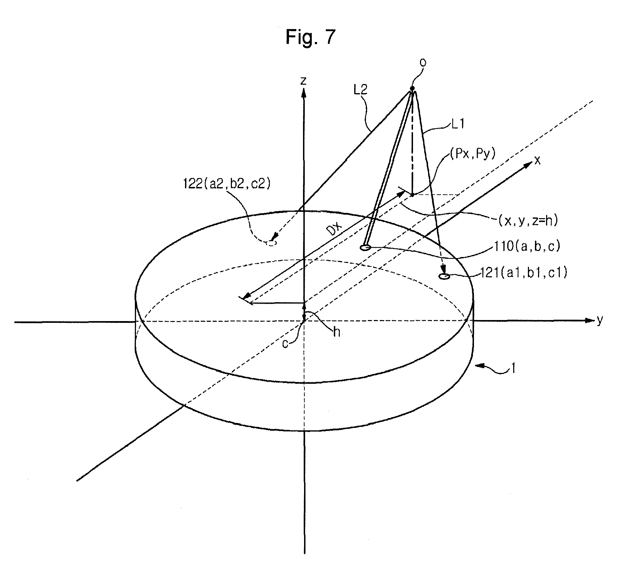

When an ultrasonic wave, transmitted from the wave transmitter 110, is received by both the first wave receiver 121 and the second wave receiver 122, as shown in FIG. 7, the ultrasonic sensor controller 140 multiplies time taken until the ultrasonic wave, transmitted from the waver transmitter 110, is received by the first and second wave receivers 121 and 122 by ultrasonic speed to calculate first and second wave receiving distances L1 and L2, substitutes the first wave receiving distance L1 and the second wave receiving distance L2 into the following [Mathematical equation 3] and [Mathematical equation 4] defined by the elliptical sphere equation, associates [Mathematical equation 3] and [Mathematical equation 4] with each other to acquire obstacle projective coordinates (Px, Py)on the obstacle sensing plane (X, Y,Z=h), and transmits the x-axis coordinate value of the obstacle projective coordinates (Px, Py), as the obstacle distance Dx, to the control unit 60.

[Mathematical equation 3]

$$\sqrt{(Px-a)^2 + (Py-b)^2 + (h-c)^2} + \sqrt{(Px-a1)^2 + (Py-b1)^2 + (h-c1)^2} = L1$$

[Mathematical equation 4]

$$\sqrt{(Px-a)^2 + (Py-b)^2 + (h-c)^2} + \sqrt{(Px-a2)^2 + (Py-b2)^2 + (h-c2)^2} = L2$$

In [Mathematical equation 3] and [Mathematical equation 4], (a, b, c) are the installation position of the wave transmitter 110 on XYZ spatial coordinates with the center C of the robot cleaner 1 as the origin, (a1, b1, c1) are the installation position of the first wave receiver 121 on XYZ spatial coordinates with the center C of the robot cleaner 1 as the origin, (a2, b2, c2) are the installation position of the second wave receiver 122 on XYZ spatial coordinates with the center C of the robot cleaner 1 as the origin, h is the obstacle sensing height on the obstacle sensing plane (X,Y,Z=h) of the robot cleaner 1, and (Px, Py) are obstacle projective coordinates at which intersection points between an elliptical sphere equation defined by L1, the installation position (a, b, c) of the wave transmitter 110, and the installation position (a1, b1, c1) of the first wave receiver 121 and an elliptical sphere equation defined by L2, the installation position (a, b, c) of the wave transmitter 110, and the installation position (a2, b2, c2) of the second wave receiver 122 are projected on the obstacle sensing plane (X,Y,Z=h) of the robot cleaner 1.

The input unit 20 and the ultrasonic distance sensor 100 are provided at the input side of the control unit 60. The display panel driver 32, the drive motor driver 45, the suction motor driver 93, and the brush motor driver 97 are provided at the output side of the control unit 60.

The control unit 60 controls the robot cleaner 1 to perform a cleaning process while moving according to a moving method inputted from the input unit 20. In other words, when a control signal is supplied to the drive motor driver 45, the left and right drive motor 42 and 44 are rotated to move the robot cleaner 1. When a control signal is supplied to the brush motor driver 97 and the suction motor driver 93, the brush motor 96 and the suction motor 92 are rotated to scatter and suction foreign matter on the floor.

The control unit 60 performs obstacle detour control using the obstacle distance Dx inputted from the ultrasonic sensor controller 140 during the movement of the robot cleaner 1. In other words, when the obstacle distance Dx inputted from the ultrasonic sensor controller 140 is less than a predetermined distance, the control unit 60 controls the robot cleaner 1 to turn left or right and then move.

The ultrasonic sensor controller 140 may be configured as a part of the control unit 60.

As apparent from the above description, the present invention has the effect of sensing the distance to an object in a wide region through the use of the ultrasonic distance sensor according to the present invention.

Also, the present invention has the effect of reducing the number of ultrasonic distance sensors used to sense distances to obstacles located on paths along which the robot cleaner moves or above the robot cleaner, thereby reducing the manufacturing costs of the robot cleaner using the ultrasonic distance sensor.

Although a few exemplary embodiments of the present invention have been shown and described, it would be appreciated by those skilled in the art that changes may be made in these exemplary embodiments without departing from the principles and spirit of the invention, the scope of which is defined in the claims and their equivalents.

**Claims**

1. An ultrasonic distance sensor comprising:

   a wave transmitter to transmit an ultrasonic wave;
   an ultrasonic wave extender to extend the ultrasonic wave; and
   a wave receiver to receive the ultrasonic wave reflected from an object.

2. The ultrasonic distance sensor according to claim 1, further comprising:

   an ultrasonic sensor controller to calculate a wave receiving distance (L1) by using time taken until the ultrasonic wave, transmitted from the waver transmitter, is received by the wave receiver and substituting an installation position of the wave transmitter, an installation position of the wave receiver, and the wave receiving distance (L1) into the following equation to calculate a distance to the object.

$$\sqrt{(Dx-a)^2 + b^2 + (h-c)^2} + \sqrt{(Dx-a1)^2 + b1^2 + (h-c1)^2} = L1$$

   where (a, b, c) are an installation position of the wave transmitter on XYZ spatial coordinates with the center of the installation body as the origin, (a1, b1, c1) are an installation position of the wave receiver on XYZ spatial coordinates with the center of the installation body as the origin, h is an object sensing height on an object sensing plane (X,Y, Z=h) of the installation body, and Dx is the distance between the center of the installation body and the object at an ultrasonic sensing zone (X,Y=0,Z=h) on the object sensing plane (X,Y,Z=h).

3. An ultrasonic distance sensor comprising:

   a wave transmitter to transmit an ultrasonic wave;
   an ultrasonic wave extender to extend the ultrasonic wave;
   first and second wave receivers to receive the ultrasonic wave reflected from an object; and
   an ultrasonic sensor controller to calculate first and second wave receiving distances (L1, L2) by using time taken until the ultrasonic wave, transmitted from the waver transmitter, is received by the first and second wave receivers, substituting the first and second wave receiving distances (L1, L2) into [Mathematical equation 3] and [Mathematical equation 4], associating [Mathematical equation 3] and [Mathematical equation 4] with each other to acquire object projective coordinates, and sensing an object distance, which is an x-axis coordinate of the object projective coordinates, wherein:

[Mathematical equation 3] is

$$\sqrt{(Px-a)^2 + (Py-b)^2 + (h-c)^2} + \sqrt{(Px-a1)^2 + (Py-b1)^2 + (h-c1)^2} = L1$$

and
[Mathematical equation 4] is

$$\sqrt{(Px-a)^2 + (Py-b)^2 + (h-c)^2} + \sqrt{(Px-a2)^2 + (Py-b2)^2 + (h-c2)^2} = L2$$

where (a, b, c) are an installation position of the wave transmitter on XYZ spatial coordinates with the center of an installation body having the sensor installed therein as the origin, (a1, b1, c1) are an installation position of the first wave receiver on XYZ spatial coordinates with the center of the installation body as the origin, (a2, b2, c2) are an installation position of the second wave receiver on XYZ spatial coordinates with the center of the installation body as the origin, h is an object sensing height on an object sensing plane (X,Y,Z=h) of the installation body, and (Px, Py) are object projective coordinates at which intersection points between an elliptical sphere equation defined by L1, the installation position (a, b, c) of the wave transmitter, and the installation position (a1, b1, c1) of the first wave receiver and an elliptical sphere equation defined by L2, the installation position (a, b, c) of the wave transmitter, and the installation position (a2, b2, c2) of the second wave receiver are projected on the object sensing plane (X, Y,Z=h) of the installation body.

4. The ultrasonic distance sensor according to claim 1 or 3, wherein the ultrasonic wave extender includes an obstacle disposed in front of the wave transmitter to obstruct the advance of the ultrasonic wave.

5. The ultrasonic distance sensor according to claim 1 or 3, wherein the ultrasonic wave extender includes opposite sidewalls formed along opposite sides of the wave transmitter in front of the wave transmitter such that each sidewall has a predetermined length and corners formed at ends of the opposite sidewalls.

6. A robot cleaner using an ultrasonic distance sensor, the ultrasonic distance sensor comprising:

   a wave transmitter to transmit an ultrasonic wave;
   an ultrasonic wave extender to extend the ultrasonic wave; and
   a wave receiver to receive the ultrasonic wave reflected from an object.

7. The robot cleaner according to claim 6, wherein the ultrasonic distance sensor further comprises:

   an ultrasonic sensor controller to calculate a wave receiving distance (L1) by using time taken until the ultrasonic wave, transmitted from the waver transmitter, is received by the wave receiver and substituting an installation position of the wave transmitter, an installation position of the wave receiver, and the wave receiving distance into the following equation to calculate an object distance,

$$\sqrt{(Dx-a)^2 + b^2 + (h-c)^2} + \sqrt{(Dx-a1)^2 + b1^2 + (h-c1)^2} = L1$$

where (a, b, c) are an installation position of the wave transmitter on XYZ spatial coordinates with the center of the robot cleaner as the origin, (a1, b1, c1) are an installation position of the wave receiver on XYZ spatial coordinates with the center of the robot cleaner as the origin, h is an object sensing height on an object sensing plane (X,Y,Z=h) of the robot cleaner, and Dx is the distance between the center of the robot cleaner and the object at an ultrasonic sensing zone (X,Y=0,Z=h) on the object sensing plane (X,Y,Z=h).

**8.** A robot cleaner using an ultrasonic distance sensor, the ultrasonic distance sensor comprising:

a wave transmitter installed at the top of a cleaner body to transmit an ultrasonic wave; an ultrasonic wave extender to extend the ultrasonic wave; and
first and second wave receivers installed at the circumference of the cleaner body to receive the ultrasonic wave reflected from an object.

**9.** The robot cleaner according to claim 8, wherein the ultrasonic distance sensor further comprises:

an ultrasonic sensor controller to calculate first and second wave receiving distances (L1, L2) by using time taken until the ultrasonic wave, transmitted from the waver transmitter, is received by the first and second wave receivers, substituting the first and second wave receiving distances into [Mathematical equation 3] and [Mathematical equation 4], associating [Mathematical equation 3] and [Mathematical equation 4] with each other to acquire object projective coordinates, and sensing an object distance, which is an x-axis coordinate of the object projective coordinates, wherein:

[Mathematical equation 3] is

$$\sqrt{(Px-a)^2+(Py-b)^2+(h-c)^2}+\sqrt{(Px-a1)^2+(Py-b1)^2+(h-c1)^2}=L1$$

and
[Mathematical equation 4] is

$$\sqrt{(Px-a)^2+(Py-b)^2+(h-c)^2}+\sqrt{(Px-a2)^2+(Py-b2)^2+(h-c2)^2}=L2$$

where (a, b, c) are an installation position of the wave transmitter on XYZ spatial coordinates with the center of the robot cleaner as the origin, (a1, b1, c1) are an installation position of the first wave receiver on XYZ spatial coordinates with the center of the robot cleaner as the origin, (a2, b2, c2) are an installation position of the second wave receiver on XYZ spatial coordinates with the center of the robot cleaner as the origin, h is an object sensing height on an object sensing plane (X,Y,Z=h) of the robot cleaner, and (Px, Py) are object projective coordinates at which intersection points between an elliptical sphere equation defined by L1, the installation position of the wave transmitter, and the installation position of the first wave receiver and an elliptical sphere equation defined by L2, the installation position of the wave transmitter, and the installation position of the second wave receiver are projected on the object sensing plane (X,Y,Z=h) of the robot cleaner.

**10.** The robot cleaner according to claim 6 or 8, wherein the ultrasonic wave extender includes an obstacle disposed in front of the wave transmitter to obstruct the advance of the ultrasonic wave.

**11.** The robot cleaner according to claim 6 or 8, wherein the ultrasonic wave extender includes opposite sidewalls formed along opposite sides of the wave transmitter in front of the wave transmitter such that each sidewall has a predetermined length and corners formed at ends of the opposite sidewalls.

**12.** The robot cleaner according to claim 7, further comprising a control unit to control movement of the robot cleaner in response to the sensed object distance and to perform a cleaning operation.

**13.** The robot cleaner according to claim 12, wherein the control unit is configured to include the ultrasonic sensor controller.

**14.** The robot cleaner according to claim 9, further comprising a control unit to control movement of the robot cleaner in response to the sensed object distance and to perform a cleaning operation,

**15.** The robot cleaner according to claim 14, wherein the control unit is configured to include the ultrasonic sensor controller.

Fig.1

Fig. 2

Fig. 3

# Fig. 4

Fig. 5

Fig. 6

## Fig. 7

Europäisches
Patentamt

European
Patent Office

Office européen
des brevets

# EUROPEAN SEARCH REPORT

Application Number

EP 08 15 9916

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 33 41 022 A1 (GROLL HORST; DETLEFSEN JUERGEN PROF DR ING; SAUTMANN EWALD PAUL) 23 May 1985 (1985-05-23) | 1-5 | INV.<br>G01S15/00 |
| Y | * pages 9-13; figure 3 * | 6-15 | |
| X | US 5 160 927 A (CHERRY JAMES R [US] ET AL) 3 November 1992 (1992-11-03) | 1,2 | |
| Y | * column 2, line 40 - column 4, line 56; figures 1-3 * | 6,7 | |
| A | US 6 289 282 B1 (HASSLER GREGOR [DE] ET AL) 11 September 2001 (2001-09-11) * column 4, lines 12-40; figure 3 * | 3 | |
| Y | US 5 935 179 A (KLEINER MENDEL [SE] ET AL) 10 August 1999 (1999-08-10) * figures 1,4 * | 6-15 | |
| X | GB 2 305 287 A (PROTHORP DESIGN LTD [GB]) 2 April 1997 (1997-04-02) | 1,2,6,7 | |
| Y | | 6,7 | TECHNICAL FIELDS SEARCHED (IPC) |
| Y | US 2006/217854 A1 (TAKENAKA HIROYUKI [JP] ET AL) 28 September 2006 (2006-09-28) * figures 1,3 * | 6-15 | G01S |

The present search report has been drawn up for all claims

| Place of search | Date of completion of the search | Examiner |
|---|---|---|
| Munich | 7 January 2009 | Kern, Olivier |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 08 15 9916

This annex lists the patent family members relating to the patent documents cited in the above-mentioned European search report.
The members are as contained in the European Patent Office EDP file on
The European Patent Office is in no way liable for these particulars which are merely given for the purpose of information.

07-01-2009

| Patent document cited in search report | | Publication date | Patent family member(s) | | Publication date |
|---|---|---|---|---|---|
| DE 3341022 | A1 | 23-05-1985 | NONE | | |
| US 5160927 | A | 03-11-1992 | NONE | | |
| US 6289282 | B1 | 11-09-2001 | DE 19842250 A1 | | 16-03-2000 |
| | | | EP 0987563 A2 | | 22-03-2000 |
| | | | KR 20000023167 A | | 25-04-2000 |
| US 5935179 | A | 10-08-1999 | NONE | | |
| GB 2305287 | A | 02-04-1997 | NONE | | |
| US 2006217854 | A1 | 28-09-2006 | JP 2006268499 A | | 05-10-2006 |

EPO FORM P0459

For more details about this annex : see Official Journal of the European Patent Office, No. 12/82

**EP 2 045 624 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20060047030